# EUROPEAN PATENT SPECIFICATION

(11) **EP 4 254 708 B1**
(45) Date of publication and mention of the grant of the patent: **06.08.2025**
(21) Application number: 22770549.8
(22) Date of filing: 16.03.2022
(51) Int. Cl.: H02J 3/26, H02J 3/18

(54) **COORDINATED CONTROL METHOD AND SYSTEM OF DISTRIBUTED COMPENSATOR, AND COMPUTER DEVICE AND STORAGE MEDIUM**
KOORDINIERTES STEUERUNGSVERFAHREN UND -SYSTEM EINES VERTEILTEN KOMPENSATORS SOWIE COMPUTERVORRICHTUNG UND SPEICHERMEDIUM
PROCÉDÉ ET SYSTÈME DE COMMANDE COORDONNÉE DE COMPENSATEUR DISTRIBUÉ, ET DISPOSITIF INFORMATIQUE ET SUPPORT DE STOCKAGE

(30) Priority: 18.03.2021 CN 202110288300
(43) Date of publication of application: 04.10.2023
(73) Proprietor: NR Electric Co., Ltd, Nanjing, Jiangsu 211102 (CN); NR Engineering Co., Ltd, Nanjing, Jiangsu 211102 (CN)
(72) Inventor: LIN, Yizhe, Nanjing, Jiangsu 211102 (CN); DONG, Yunlong, Nanjing, Jiangsu 211102 (CN); LU, Yu, Nanjing, Jiangsu 211102 (CN); PAN, Lei, Nanjing, Jiangsu 211102 (CN); MA, Xiuda, Nanjing, Jiangsu 211102 (CN); REN, Tieqiang, Nanjing, Jiangsu 211102 (CN); WU, Feixiang, Nanjing, Jiangsu 211102 (CN)
(74) Representative: Grünecker Patent- und Rechtsanwälte PartG mbB
(86) International application number: PCT/CN2022/081153
(87) International publication number: WO 2022/194196

(56) References cited:
- EP-A1- 3 672 008
- CN-A- 111 600 494
- CN-A- 111 934 323
- CN-A- 112 491 076
- CN-A- 112 491 076
- CN-A- 112 491 077
- DE-T5- 112021 002 393
- US-A- 5 883 796
- YONGFENG YAO, CHAO , ZHOU, YINGYU , CUI, JIA , JIA, PENG , WANG: "电 Distributed Compensation Strategy for Capacitive Current in Distribution Network （1. State Grid Henan Electric Power Company Xinxiang Power Supply Company, Xinxiang 453000, China；", PROCEEDINGS OF THE CSU-EPSA, vol. 30, no. 12, 31 December 2018 (2018-12-31), pages 139 - 144, XP055967570, ISSN: 1003-8930, DOI: 10.3969/j.issn.1003-8930.2018.12.021

## Description

### TECHNICAL FIELD

This application relates to the field of flexible alternating-current transmission in power system, and in particular relates to a coordinated control method and system for a distributed compensator, and a computer device and a storage medium.

### BACKGROUND

With the interconnection of large-scale power systems and the use of various new devices, the power generation and transmission are more economical and efficient while the scale and complexity of the power systems are also increased. In addition, a large number of distributed power generation systems are connected to the power grid, reversing the conventional direction of power flow which is from transmission network to distribution network. Due to the continuous growth of power load, power flow control methods are needed to improve the existing power transmission capability. The complex power exchange between the booming smart grid and the electricity market also needs frequent power flow optimization control.

According to a distributed compensator, each small-capacity compensator can be directly suspended on a power line in a distributed mode, thus the controlling function and effect of the power grid power flow similar to that of a static synchronous series compensator are achieved. A more flexible and more advanced control method can be provided for the smart grid, and the power supply capability, the safety and the stability of the power system are effectively improved. The distributed compensator has the characteristics of small size, light weight and the like. A large number of distributed subunits can guarantee the redundancy of devices, and then the reliability is improved. Meanwhile, distributed compensator devices can be dispersedly deployed on a power transmission line or a substation, so that the occupied area is small.

At present, there are several demonstration projects of distributed compensators (distributed static synchronous series compensator) in China and abroad. Control protection systems of these projects are relatively simple, which are in component on-site control mode. However, the control mode is not flexible, and the performance of power flow adjustment is not relatively good. Some colleges and universities and research institutions in China have carried out projects on various distributed compensators (distributed series reactors, distributed static synchronous series compensators, distributed power flow controllers and the like), and mainly focused on topological structure, simulation modeling and system control strategy. There are no literatures and patents on coordinated control between all phases of all circuit lines for module fault in the distributed compensators.

A common distributed compensator structure includes three-phase voltage source converters which are connected into a three-phase alternating-current line in series respectively, the converters of each phase are formed by multiple modules sequentially connected in series, and three phases are kept balanced. The distributed compensator has a single circuit line operating mode and a multiple circuit line operating mode. In the Background, the disclosed information is only used for enhancing the understanding of the background of this application, and may include existing technical information that does not constitute knowledge to those of ordinary skill in the art.
CN 112 491 076 A, considered as closest prior Art, relates to a distributed series compensator startup and shutdown method. A starting method and a shutdown method of a distributed series compensator is provided, which suppresses the DC overvoltage and overcurrent when the unit module is switched on and off, and reduce the AC line's disturbance during startup and shutdown.
EP 3 672 008 A1 relates to a series compensator, and control method. The series compensator includes a series transformer, a series transformer bypass device, a voltage source converter, a high-speed converter bypass device, a high-speed switch, and a reactor. The reactor and the high-speed switch are connected in parallel to form a current limiting module; one winding of the series transformer has two ends connected in series to a line, and the other winding thereof is sequentially connected to the current limiting module and the high-speed converter bypass device; the voltage source converter and the high-speed converter bypass device are connected in parallel; and at least one winding of the series transformer are connected in parallel to at least one series transformer bypass device.
CN 111 934 323 A relates to a control and protection system of distributed series compensator. The control and protection systems include a remote dispatch control unit with hierarchical arrangement and hierarchical control, a centralized control and protection unit in the station, and a local module control layer. The remote dispatch control unit obtains a power instruction according to the real-time operating status of the AC power grid; the centralized control and protection layer in the station receives the power instruction and converts it into a voltage instruction of each local series compensation module; the module control protection layer receives the voltage instruction and outputs an output voltage instruction of the local series compensation module; the module valve base control layer converts the output voltage instruction of the local module into an opening and closing command of the power electronic device in the local module control layer.

### SUMMARY

It is the object of the present invention to improve stability of an alternating-current power grid even when a module of one phase has a faults.

This object is solved by the subject matter of the independent claims.

Preferred embodiments are defined by the dependent claims.

An exemplary embodiment of this application provides a coordinated control method and system for a distributed compensator, and a computer device and a storage medium, which can quickly and stably treat the module fault in each phase of the distributed compensator, and ensure balanced control of all phases of all circuit lines in a case that a module of a certain phase of a certain circuit line has a fault, thus avoiding unbalanced disturbance to a power grid.

According to one aspect, this application provides a coordinated control method for a distributed compensator, the distributed compensator is composed of converters that are connected to three phases of alternating-current lines in series respectively, and the converters that are connected into each phase are formed by multiple modules sequentially connected in series. The method includes:
during the process of normal operation of the distributed compensator, checking, in real time, the operating state of each module among the multiple modules in the converter of each phase, so as to obtain the first number of modules in each phase. The first number of modules is the number of available modules, which have normal operation conditions and do not have faults, in the converter of each phase;
calculating, in real time, the second number of modules, which can effectively output voltages, of the distributed compensator. The second number of modules is equal to the minimum value of the first number of modules in each phase;
in a case that any module of the converter in any phase has a fault, blocking and bypassing the module that has a fault, and in addition, subtracting one from the first number of modules in the fault phase, and keeping the first number of modules in a non-fault phase unchanged; and
comparing the first number of modules in each phase with the second number of modules, and in a case that the first number of modules is greater than the second number of modules, converting the state of a module, which needs to be converted into hot standby state, in a converter of a phase, in which the first number of modules is greater than the second number of modules, into the hot standby state. The number of modules, the states of which need to be converted into the hot standby state, is equal to the difference of the first number of modules and the second number of modules in the phase in which the modules, the states of which need to be converted into the hot standby state.

In one embodiment, the converter is a voltage source converter.

In one embodiment, the distributed compensator is in a single circuit line operating mode, and the distributed compensator is only connected to a single circuit alternating-current line in series.

In one embodiment, the calculating, in real time, the second number of modules, which can effectively output voltages, of the distributed compensator includes:
determining the minimum value of the first number of modules of each phase in the single circuit alternating-current line as the second number of modules.

In one embodiment, the distributed compensator is in a multiple circuit line operating mode, and the distributed compensator are connected to parallel multiple circuit alternating-current lines in series.

In one embodiment, the calculating, in real time, the second number of modules, which can effectively output voltages, of the distributed compensator includes:
receiving the minimum value of the first number of modules of each phase in each parallel multiple circuit alternating-current line, and determining a minimum value from the received minimum values as the second number of modules.

In one embodiment, the method further includes: sequentially determining whether each module of the phase has a fault in a case that the number of modules, the states of which need to be converted into the hot standby state, is larger than or equal to 1; converting the state of current module into the hot standby state in a case that the current module does not have a fault; and subtracting 1 from the number of modules, the states of which need to be converted into the hot standby state.

In one embodiment, the sequentially determining whether each module of the phase has a fault in a case that the number of modules, the states of which need to be converted into the hot standby state, is larger than or equal to 1 includes: subtracting 1 from the number of modules, the states of which need to be converted into the hot standby state, in a case that the current module has a fault, and skipping converting the current module into the hot standby state.

In one embodiment, the method further includes: keeping the operating state of each module of the phase, in which the modules, the states of which need to be converted into the hot standby state, are located unchanged in a case that the number of modules, the states of which need to be converted into the hot standby state, is equal to zero, and keeping calculating the number of modules, the states of which need to be converted into the hot standby state, of the phase in real time.

In one embodiment, the hot standby state is:
a state that the module, the state of which needs to be converted into the hot standby state, is deblocked to operate and has voltage output capability, but the output voltage of the module, the state of which needs to be converted into the hot standby state, is kept to be 0.

In one embodiment, the converter is a voltage source converter.

According to the other aspect, this application provides a coordinated control system for a distributed compensator; the distributed compensator is composed of converters that are connected to three phases of alternating-current lines in series respectively, and the converters of each phase are formed by multiple modules sequentially connected in series. The coordinated control system includes:
a module state monitoring component configured to check, in real time, the operating state of each module, in the converter of each phase of the distributed compensator;
an effective module number calculation component configured to calculate, in real time, the first number of modules in each phase according to the operating state of each module, and calculate, in real time, the second number of modules, which can effectively output voltages, of the distributed compensator, the first number of modules being the number of available modules, which have normal operation conditions and do not have faults, in the converter of each phase; and
a module hot standby state control component configured to calculate, in real time, the number of modules, the states of which need to be converted into the hot standby state, in the converter of each phase, and convert the state of modules, which need to be converted into the hot standby state, in the converter of each phase into the hot standby state.

In one embodiment, the coordinated control system further includes:
a multiple circuit line communication component configured to take effect only in a case that the distributed compensator is in a multiple circuit line operating mode, and determine the minimum value of the first number of modules in each parallel multiple circuit alternating-current line.

In one embodiment, the module hot standby state control component is configured to calculate, in real time, the number of modules, the states of which need to be converted into the hot standby state, in the converter of each phase; and in a case that the number of modules, the states of which need to be converted into the hot standby state, in one phase of each phase is zero, no module in the one phase is converted into the hot standby state.

In one embodiment, the operating state includes module deblocked, module blocked and module fault.

According to another aspect, this application provides a computer device, including a memory and a processor, the memory stores a computer program, and the processor executes the computer program to implement the steps of the method above.

According to another aspect, this application provides a computer readable storage medium, the computer readable storage medium stores a computer program, and the computer program is executed by the processor to implement the steps of the method above.

According to the coordinated control method and system for the distributed compensator, and the computer device and the storage medium in this application, coordinated control over the distributed compensator can be realized. That is, in a case that the module in a certain phase of the distributed compensator at a certain circuit line has a fault, the fault module of the fault phase will be bypassed rapidly, the number of available modules of all phases of all circuit lines will be updated at the same time, and moreover, the number of effective input modules of all the circuit lines will be calculated in real time. In addition, the corresponding number of modules are selected to be converted into the hot standby state according to the number of available modules of all the phases and the number of effective input modules of all the circuit lines, thus keeping the number of modules, which can effectively output voltages, of all the phases of all the circuit lines consistent, and then it ensures that all the phases are outputted consistently. As a result, coordinated balance control over all the phases of all the circuit lines is achieved. By the adoption of the coordinated control solution above, the module fault of the distributed compensator can be quickly and stably treated, ensuring balanced control of all phases of all circuit lines still in a case that a module of a certain phase of a certain circuit line has a fault, thus avoiding unbalanced disturbance to an alternating-current power grid.

### BRIEF DESCRIPTION OF THE DRAWINGS

In order to provide a clearer explanation of embodiments of this application or the technical solutions in the prior art, a brief introduction will be given to the accompanying drawings required in the description of the embodiments or prior art. Obviously, the accompanying drawings in the following description are only some embodiments of this application. For those of ordinary skill in the art, other accompanying drawings can be obtained based on these accompanying drawings without any creative effort.
FIG. 1 is a flowchart of a treating method for module fault in a certain phase of existing power flow controller and VSC-HVDC power transmission projects.
FIG. 2 is a flowchart of a coordinated control method for a distributed compensator according to an embodiment of this application.
FIG. 3 is a schematic structural diagram of a coordinated control system for a distributed compensator according to an embodiment of this application.
FIG. 4 is a schematic structural diagram of a coordinated control system for a distributed compensator according to another embodiment of this application.
FIG. 5 is a flowchart of a control method for a module hot standby state control component according to an embodiment of this application.
FIG. 6 is a schematic structural diagram of a module hot standby state control component according to an embodiment of this application.
FIG. 7 is a schematic structural diagram of a module hot standby state control component according to another embodiment of this application.
FIG. 8 is an internal structure diagram of a computer device according to an embodiment of this application.

### DETAILED DESCRIPTION

As described above, in a common distributed compensator structure, in a case that a module of a certain phase in three phases has a fault under a single circuit line operating mode, the number of available modules of the phase will be reduced. In a case that no inter-phase coordinated control is carried out, and the non-fault phase still keeps the original state to operate, the voltage output of a three-phase voltage source converter will be asymmetric, which will cause asymmetric equivalent impedance of a three-phase alternating-current line, and then zero-sequence and negative-sequence currents will be generated in the alternating-current line. As a result, the normal operation of the alternating-current line will be influenced. In a multiple circuit line operating mode, all lines are operated in parallel. In a case that a module in a certain circuit line has a fault, no coordinated control is carried out on the lines, and the non-fault lines still keep the original state to operate, the voltage output of the distributed compensator of each line will be unbalanced, which will cause unbalanced equivalent impedance of each line, and then asymmetric circulation will be generated among the lines. As a result, the normal operation of the alternating-current system will be influenced.

At present, modular multi-level converter is adopted in the power flow controller or VSC-HVDC power transmission projects. For the module fault occurs in a certain phase, the adopted treatment mode mostly excludes inter-phase coordinated control, but put redundant modules into the fault phase to replace the bypassed fault module. In a case that the number of fault modules exceeds the set number of the redundant modules, the converter will be triggered to be blocked. The distributed compensator has no specific redundancy design, and each module in series can be operated independently. The converter has the single-module operation capability, so the converter needs to be triggered to be blocked only in a case that all the modules in series of a certain phase have a fault.

Therefore, in a case that the module of a certain phase of the distributed compensator has a fault, to fully utilize the redundancy and flexibility of the distributed compensator and avoid the problems of three-phase asymmetry and imbalance of each circuit line caused by the module fault, a coordinated control method which can quickly and stably treat the module fault of each phase of the distributed compensator is needed. It ensures balanced control of all phases of all circuit lines still in a case that the module has a fault.

The exemplary embodiments will be described comprehensively with reference to the accompanying drawings. However, the exemplary embodiments can be implemented in a plurality of forms, and not be considered as being limited to the embodiments described herein. On the contrary, the embodiments are provided to make this application more comprehensive and complete, and to comprehensively convey the idea of the exemplary embodiments to a person skilled in the art. A same reference numeral in the accompanying drawings represents same or similar components, and therefore repeated descriptions of the components are appropriately omitted.

In addition, the described features, structures or characteristics may be combined in one or more embodiments in any appropriate manner. In the following descriptions, many specific details are provided to obtain a thorough understanding of the embodiments of the present disclosure. However, a person skilled in the art is to be aware that, the technical solutions in the present disclosure may be implemented without one or more of the particular details, or another method, element, material, apparatus, step, and the like may be adopted. In such cases, well-known structures, methods, apparatuses, implementations, materials, or operations are not shown or described in detail.

The flowcharts shown in the accompanying drawings are merely exemplary descriptions, are not necessary to include all content and operations/steps, and are not necessary to be performed in the described orders either. For example, some operations/steps may be further divided, while some operations/steps may be combined or partially combined. Therefore, an actual execution order may change according to an actual case.

Terms "include" and "comprise" used in the description and claims of this application indicate the presence of the described characteristics, entity, steps, operations, elements and/or components, but do not exclude the presence or addition of one or more other characteristics, entity, steps, operations, elements, components and/or sets thereof.

In this application, the use of ordinal terms such as "first" and "second" to modify an element does not mean any priority, rank or order of one element relative to another, or the time order of performing actions in a method. Unless otherwise specified, such ordinal numbers are only used as a label to distinguish one element with a specific name from another element with the same name (except ordinal numbers in one embodiment). In all the accompanying drawings, unless otherwise defined in the context, similar or same components with the same function are denoted by the same reference numerals, and different embodiments of similar or same components with the same function are distinguished by different letter suffixes of reference numerals with the same reference numerals.

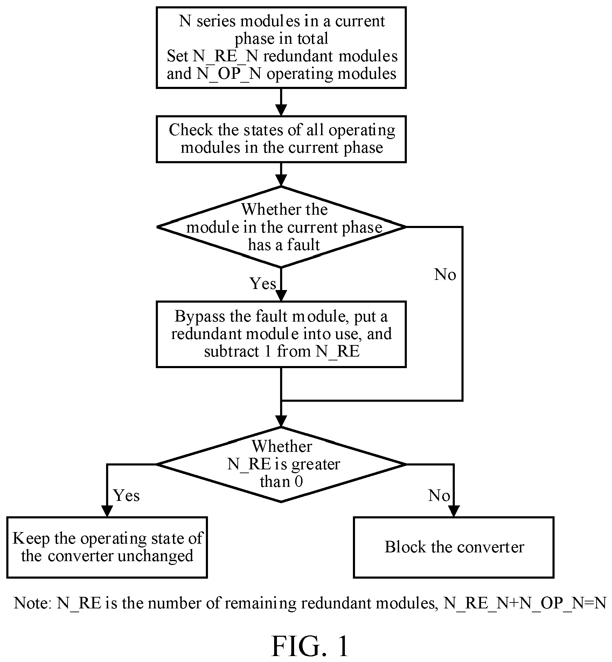

FIG. 1 is a flowchart of a treating method for module fault in a certain phase of existing power flow controller and VSC_HVDC power transmission project.

As shown in FIG. 1, in a case that the method is adopted, N_RE_N redundant modules will be set in N series modules of the converter of each phase of the distributed compensator, and the number of operating modules will be set to be N_OP_N. In the normal operating process of the converter, the redundant modules do not output effective voltage. In a case that a certain operating module of a certain phase has a fault, the fault module will be bypassed, one redundant module will be put into use, and 1 will be subtracted from the number N_RE of the remaining redundant modules, thus the number N_OP_N of the running modules of the phase is kept unchanged, and the original operating state of the converter will be maintained. In a case that the number N_RE of the remaining redundant modules is 0, the redundant modules of the phase of converter may be exhausted, and the converter will be blocked. N_RE_N + N_OP_N = N, and the three numbers are determined positive integers. N_RE is a natural number between N_RE_N and 0, and will change according to the number of fault modules, and the specific relation is N_RE = N_RE_N-the number of fault modules.

Each series module of the distributed compensator can be operated independently, and the converter has the single-module operation capability, so in a case that the method is adopted, the redundancy and the flexibility of the distributed compensator cannot be fully utilized.

An exemplary embodiment of this application provides a coordinated control method and system for a distributed compensator, and a computer device and a storage medium, which ensures balanced control of all phases of all circuit lines and normal operation of the distributed compensator still in a case that a module of a certain phase of a certain circuit line has a fault, thus avoiding unbalanced disturbance to an alternating-current power grid.

This application aims to provide a coordinated control method and system for a distributed compensator, and a computer device and a storage medium, which can quickly and stably treat the fault in a module of each phase of the distributed compensator, and ensure balanced control of all phases of all circuit lines still in a case that a module of a certain phase of a certain circuit line has a fault, thus avoiding unbalanced disturbance to an alternating-current power grid.

The coordinated control method and system for the distributed compensator according to this embodiment of this application are described in detail in reference with the accompanying drawings as follows.

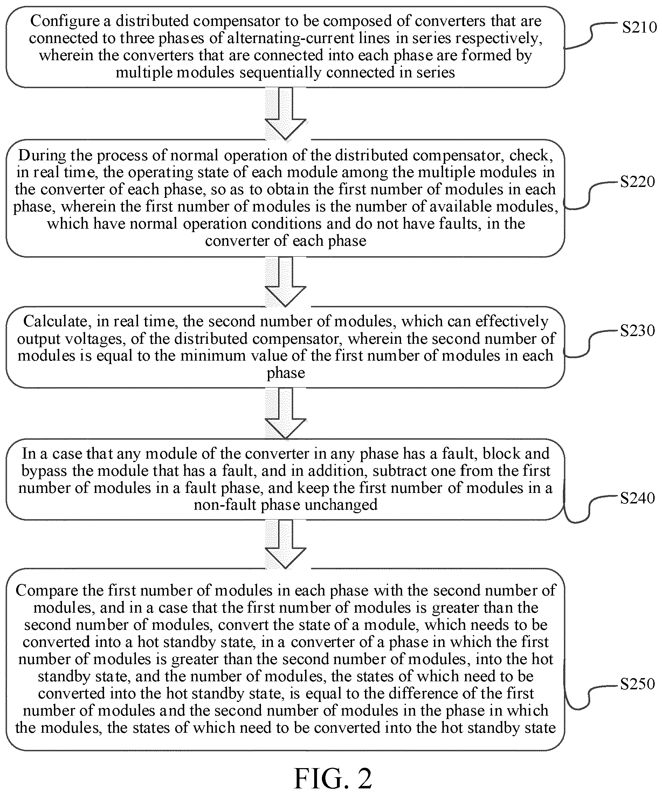

FIG. 2 shows a flowchart of a coordinated control method for a distributed compensator according to an embodiment of this application.

As shown in FIG. 2, step S210, the distributed compensator is configured.

The distributed compensator is composed of converters that are connected to three phases of alternating-current lines in series respectively, and the converters of each phase are formed by multiple modules sequentially connected in series.

Step S220, the operating state of each module of the converter of each phase is checked.

During the process of normal operation of the distributed compensator, the operating state of each module among the multiple modules of the converter of each phase is checked in real time, so as to obtain the first number of modules of each phase, and the first number of modules is the number of available modules, which have normal operation conditions and do not have faults, in the converter of each phase.

Step S230, the number of modules, which can effectively output voltages, of the distributed compensator is calculated.

The second number of modules, which can effectively output voltages, of the distributed compensator is calculated in real time, and the second number of modules is equal to the minimum value of the first number of modules in each phase.

Step S240, blocking and bypassing in a case that a module has a fault is performed.

The fault module is blocked and bypassed in a case that any module of the converter of any phase has a fault, and in addition, one is subtracted from the first number of modules in the fault phase, and the first number of modules in a non-fault phase is kept unchanged.

In step S250, the module that needs to be converted is switched to hot standby state. The number of first modules in each phase is compared with the number of second modules respectively. If the number of first modules is greater than the number of second modules, the modules in the converter of the phase where the first modules of the first number of modules are located and need to be switched to the hot standby state are switched to the hot standby state, wherein the number of modules that need to be switched to the hot standby state is equal to the number of first modules of the phase where the modules that need to be switched to the hot standby state are located minus the number of second modules.

In one embodiment, the converter is a three-phase voltage source converter.

In one embodiment, the calculating, in real time, the second number of modules, which can effectively output voltages, of the distributed compensator includes: the minimum value of the first number of modules of each phase in the single circuit alternating-current line is determined as the second number of modules.

In one embodiment, the calculating, in real time, the second number of modules, which can effectively output voltages, of the distributed compensator includes: the minimum value of the first number of modules of each phase in each parallel multiple circuit alternating-current line is received, and the minimum value from the received minimum values is determined as the second number of modules.

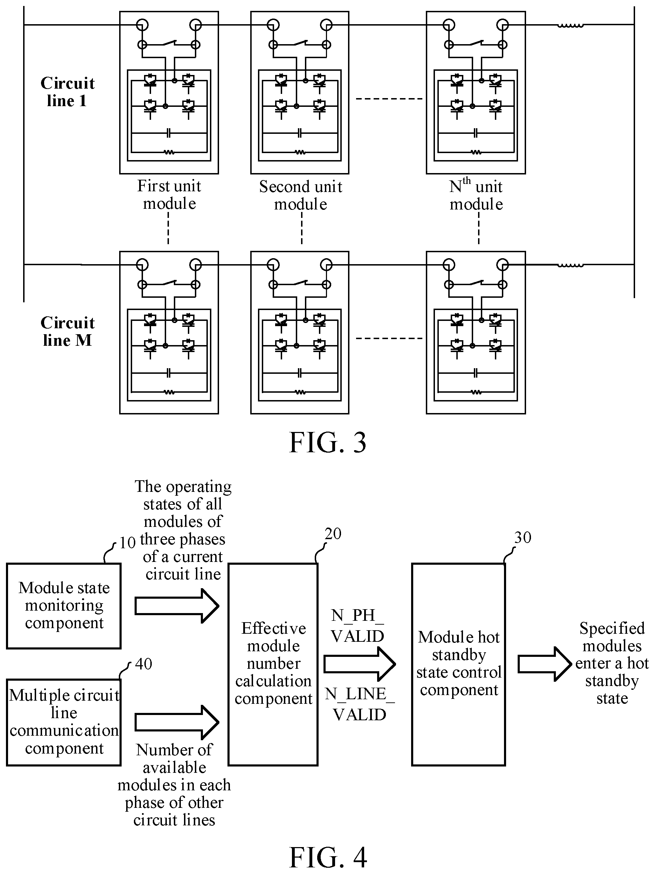

FIG. 3 shows a schematic structural diagram of a coordinated control system for a distributed compensator according to an embodiment of this application.

As shown in FIG. 3, in each circuit line, the distributed compensator includes converters connected to three phases of alternating-current lines in series respectively, and the converters of each phase are formed by multiple modules sequentially connected in series. In this embodiment, the coordinated control system includes M circuit lines, the converters are connected to three phases of alternating-current lines in series respectively, and the converters of each phase are formed by sequentially connecting N modules in series. For example, in the circuit line 1, the converter of each phase includes a first module, a second module and so up to a N^{th} module.

FIG. 4 shows a schematic structural diagram of a coordinated control system for a distributed compensator according to an embodiment of this application.

As shown in FIG. 4, the coordinated control system for the distributed compensator includes a module state monitoring component 10, an effective module number calculation component 20, a module hot standby state control component 30 and a multiple circuit line communication component 40.

As shown in FIG. 4, the module state monitoring component 10 is configured to check, in real time, the operating state of each module in the converter of each phase of the distributed compensator and transmit the operating state of each module to the effective module number calculation component 20. The multiple circuit line communication component 40 is configured to take effect only in a case that the distributed compensator is in a multiple circuit line operating mode, summarize the minimum value of the number of available modules of the converter of each phase in each parallel multiple circuit alternating-current line, and transmit the minimum value of the number of available modules to the effective module number calculation component 20. The multiple circuit line communication component 40 can be omitted in a case of a single circuit line operating mode.

As shown in FIG. 4, the effective module number calculation component 20 is configured to calculate, in real time, the number of available modules of the converter of each phase, according to the operating state of each module, calculate, in real time, the second number of modules, which can effectively output voltages, of the distributed compensator, and transmit the number of modules which can effectively output voltages to the module hot standby state control component 30. The first number of modules is the number of available modules, which have normal operation conditions and do not have faults, in the converter of each phase.

As shown in FIG. 4, the module hot standby state control component 30 is configured to calculate, in real time, the number of modules, the states of which need to be converted into the hot standby state, in the converter of each phase and convert the modules, the states of which need to be converted into the hot standby state, in the converter of each phase into the hot standby state. The number of modules, the states of which need to be converted into the hot standby state, in the converter of each phase is equal to the difference of the number of available modules of the converter of each phase and the number of modules, which can effectively output voltages, of the distributed compensator.

In one embodiment, the operating state of each module includes module deblocked, module blocked and module fault.

The specific limitation of the coordinated control system for the distributed compensator can refer to the limitation of the coordinated control method for the distributed compensator in the above, and is not repeated here. All or part of components in the coordinated control system for the distributed compensator can be realized through software, hardware and combination thereof. All the components mentioned above can be embedded in or independent of a processor in the computer device in a hardware form, and can also be stored in a memory in the computer device in a software form, and thus the processor can call and execute operations corresponding to all the components.

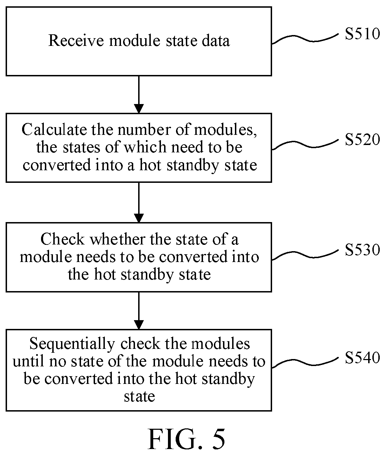

FIG. 5 shows a flowchart of a control method for a module hot standby state control component according to an embodiment of this application.

As shown in FIG. 5, step S510, module state data is received.

The module hot standby state control component is configured to receive the transmitted number signals of the available modules of the converter of each phase and the number signals of the modules, which can effectively output voltages, of the distributed compensator.

Step S520, the number of modules, the states of which need to be converted into the hot standby state is calculated.

The module hot standby state control component is configured to calculate, in real time, the number of modules, the states of which need to be converted into the hot standby state, in the converter of each phase. The number of modules, the states of which need to be converted into the hot standby state, in the converter of each phase is equal to the difference of the number of available modules of the converter of each phase and the number of modules, which can effectively output voltages, of the distributed compensator.

Step S530, whether the state of a module needs to be converted into the hot standby state is checked.

In a case that the state of module needs to be converted into the hot standby state, the module hot standby state control component is configured to determine whether the current module has a fault. In a case that no fault exists, the state of module is converted into the hot standby state, and 1 is subtracted from the number of modules in the hot standby state.

Step S540, the modules are sequentially checked until no state of the module needs to be converted into the hot standby state.

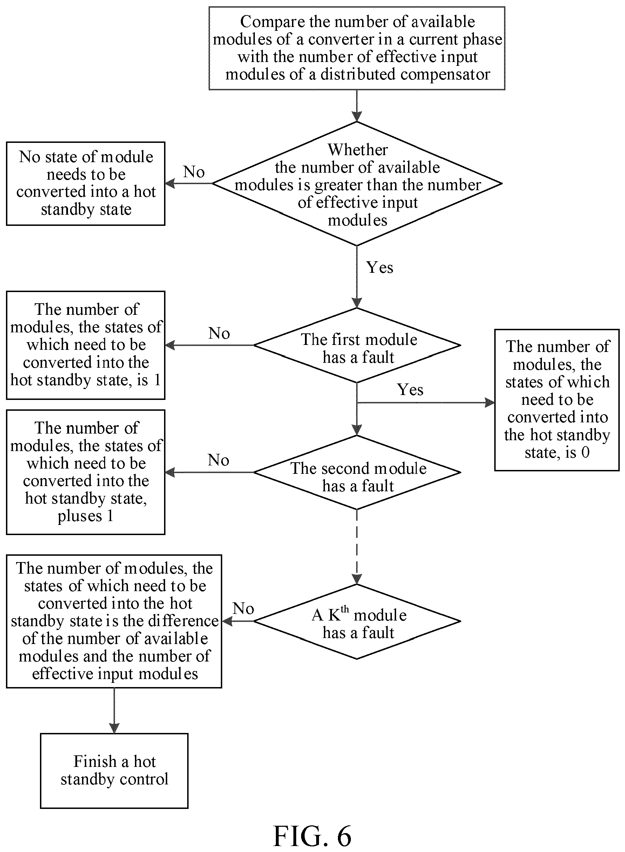

The states of all modules are determined sequentially until the number of modules, the states of which need to be converted into the hot standby state, is zero. For example, in a case that the checked module has a fault, the next module continues to be determined, and 1 is subtracted from the number of modules in the hot standby state. As shown in FIG. 6, in a case that the number of available modules of the current phase of converter is greater than the number of effective input modules of the distributed compensator, whether the first module has a fault is determined firstly. In a case that no fault exists, the state of first module is converted into the hot standby state. In a case that the fault exists, the second module continues to be determined, and the rest can be done in the same manner until the number of hot standby modules is equal to the difference of the number of available modules of the current phase of converter and the number of effective input modules of the distributed compensator.

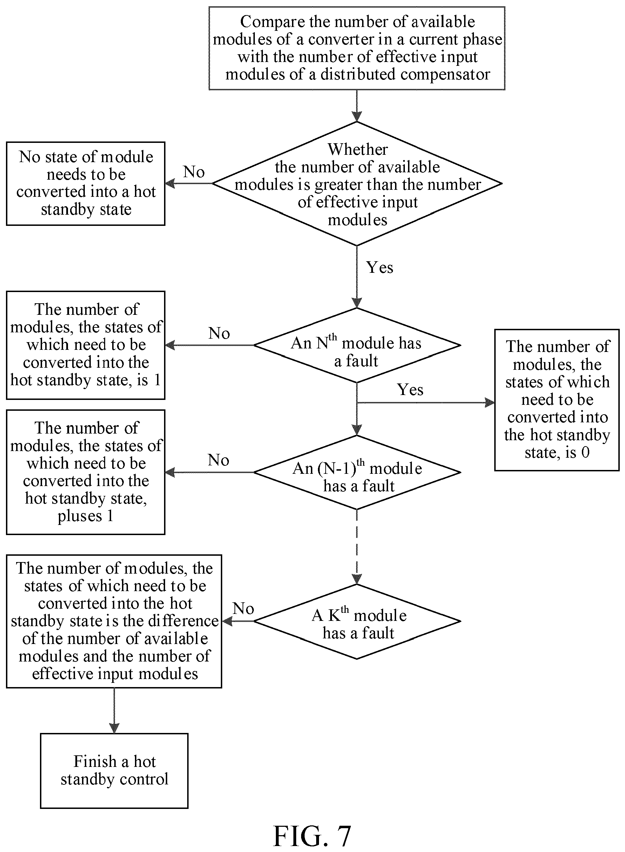

Alternatively, as shown in FIG. 7, in a case that the number of available modules of the current phase of converter is greater than the number of effective input modules of the distributed compensator, whether an N^{th} module has a fault is determined firstly. In a case that no fault exists, the state of N^{th} module is converted into the hot standby state. In a case that the fault exists, an (N-1)^{th} module continues to be determined, and the rest can be done in the same manner until the number of hot standby modules is equal to the difference of the number of available modules of the current phase of converter and the number of effective input modules of the distributed compensator.

An exemplary embodiment of this application further provides a computer device. The computer device includes a memory and a processor. The memory stores a computer program. The processor executes the computer program to implement the steps of the coordinated control method for the distributed compensator according to each embodiment of this application. The implemented steps of the control method are not limited to the exemplary embodiments mentioned above, and for example, other additional and optional operations/steps may be implemented, some operations/steps may be decomposed, and some operations/steps may be merged or partially merged, so the sequence of actual execution may be changed according to actual conditions.

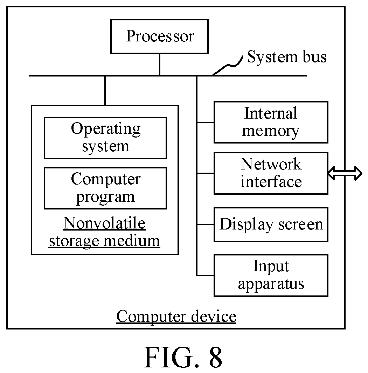

In one embodiment, a computer device is provided, the computer device can be a terminal, and an internal structure diagram of the computer device can be shown in FIG. 8. The computer device includes a processor, a memory, a network interface, a display screen and an input apparatus which are connected through system buses. The processor of the computer device is configured to provide calculation and control capabilities. The memory of the computer device includes a nonvolatile storage medium and an internal memory. The nonvolatile storage medium stores an operating system and a computer program. The internal memory provides an environment for operation of the operating system and the computer program in the nonvolatile storage medium. The computer device may include the network interface, and the network interface is configured to communicate with an external terminal through network connection. The computer program can be executed by the processor to implement the coordinated control method for the distributed compensator. The computer device can further include the display screen, the display screen can be a liquid crystal display screen or an electronic ink display screen. The input apparatus of the computer device can be a touch layer covering the display screen, can also be a key, a track ball or a touch pad arranged on a shell of the computer device, and can also be an externally connected keyboard, a touch pad or a mouse and the like.

A person skilled in the art can understand that the structure shown in FIG. 8 is only a block diagram of a partial structure related to the solution of this application and does not constitute a limitation on the computer device to which the solution of this application is applied, and the specific computer device may include more or fewer components than those shown in the figure, or combine certain components or have different component arrangements.

An exemplary embodiment of this application further provides a computer readable storage medium. A computer program is stored on the computer readable storage medium. The computer program can be executed by the processor to implement the steps of the coordinated control method for the distributed compensator according to this embodiment of this application. The implemented steps of the control method are not limited to the exemplary embodiments mentioned above, and for example, other additional and optional operations/steps may be implemented, some operations/steps may be decomposed, and some operations/steps may be merged or partially merged, so the sequence of actual execution may be changed according to actual conditions.

The above provides a detailed description and explanation of the embodiments of this application. This application describes how specific examples are formed and used, but this application is not limited to any details of these examples. On the contrary, based on the teachings disclosed in this application, these principles can be applied to many other embodiments.

By describing the exemplary embodiments, it is easy for a person skilled in the art to understand that the technical solution according to this embodiment of this application has at least one or more of the following advantages.

According to some embodiments of this application, the coordinated control of the distributed compensator can be realized by this application. That is, in a case that the module in a certain phase of the distributed compensator at a certain circuit line has a fault, the fault module of the fault phase will be bypassed rapidly, the number of available modules of all phases of all lines will be updated at the same time, and moreover, the number of effective input modules of all the lines will be calculated in real time. In addition, the corresponding number of modules are selected to be converted into the hot standby state according to the number of available modules of all the phases and the number of effective input modules of all the lines, thus keeping the number of modules, which can effectively output voltages, of all the phases of all the lines consistent, and then it ensures that all the phases are outputted consistently. As a result, coordinated balance control over all the phases of all the lines is achieved.

According to some embodiments of this application, the coordinated control method for the distributed compensator in this application can quickly and stably treat the module faults of the distributed compensator, and ensures balanced control of all phases of all lines still in a case that a module of a certain phase of a certain line has a fault, thus avoiding unbalanced disturbance to an alternating-current power grid.

Any reference to memory, storage, database or other media used by this application may include a non-volatile and/or volatile memory. The suitable non-volatile memory may include a read-only memory (ROM), a programmable ROM (PROM), an electrically programmable ROM (EPROM), an electrically erasable programmable ROM (EEPROM) or a flash memory. The volatile memory may include a random access memory (RAM) that serves as an external cache memory. As an illustrative but not limited to, RAM may be available in a variety of forms such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a rambus direct RAM (RDRAM), a direct rambus dynamic RAM (DRDRAM), and a rambus dynamic RAM (RDRAM).

The above specifically shows and describes exemplary embodiments of this application. This application is not limited to the detailed structure, setting method, or implementation method described herein. The invention is rather defined and therefore limited by the features of the independent claims. Preferred embodiments are defined in the dependent claims.

## Claims

1. A coordinated control method for a distributed compensator, wherein the distributed compensator is composed of converters that are connected to three phases of alternating-current lines in series respectively, the converters that are connected into each phase are formed by multiple modules sequentially connected in series, and the method is **characterized in that** :
during the process of normal operation of the distributed compensator, checking (S220), in real time, the operating state of each module among the multiple modules in the converter of each phase, so as to obtain the first number of modules in each phase, a first number of modules being the number of available modules, which have normal operation conditions and do not have faults, in the converter of each phase;
calculating (S230), in real time, a second number of modules, which can effectively output voltages, of the distributed compensator, the second number of modules being equal to the minimum value of the first number of modules in each phase;
in a case that a first module of the converter of a first phase has a fault, blocking and bypassing (S240) the first module, and in addition, subtracting one from the first number of modules in the first phase, and keeping the first number of modules in a non-fault phase unchanged; and
for each of the three phases, comparing (S250) the first number of modules in each phase with the second number of modules, and in a case that the first number of modules is greater than the second number of modules, switching a state of a module, which needs to be converted into a hot standby state and which is in a converter of a phase in which the first number of modules is greater than the second number of modules, into the hot standby state; the number of modules whose state need to be switched into the hot standby state, equals to the difference of the first number of modules of the phase where the modules that need to be switched to the hot standby state are located and the second number of modules.

2. The method according to claim 1, **characterized in that** the distributed compensator is in a single circuit line operating mode, and only a single circuit alternating-current line is connected to the distributed compensator in series.

3. The method according to claim 2, **characterized in that** a step of the calculating, in real time, the second number of modules, which can effectively output voltages, of the distributed compensator includes:
determining the minimum value of the first number of modules of each phase in the single circuit alternating-current line as the second number of modules.

4. The method according to claim 1, **characterized in that** the distributed compensator is in a multiple circuit line operating mode, and parallel multiple circuit alternating-current lines are all connected to the distributed compensator in series.

5. The method according to claim 4, **characterized in that** a step of the calculating, in real time, the second number of modules, which can effectively output voltages, of the distributed compensator includes:
receiving the minimum value of the first number of modules of each phase in each parallel multiple circuit alternating-current line, and determining a minimum value from the received minimum values as the second number of modules.

6. The method according to claim 1, **characterized by** further including:
sequentially determining whether each module of the phase has a fault in a case that the number of modules, the states of which need to be switched into the hot standby state, is larger than or equal to 1; switching the state of a current module into the hot standby state in a case that the current module does not have a fault; and subtracting 1 from the number of modules, the states of which need to be switched into the hot standby state.

7. The method according to claim 6, **characterized in that** a step of the sequentially determining whether each module of the phase, has a fault in a case that the number of modules, the states of which need to be switched into the hot standby state, is larger than or equal to 1 includes:
skipping switching the state of current module into the hot standby state in a case that the current module has a fault, and keeping the number of modules, the state of which needs to be switched into the hot standby state, unchanged.

8. The method according to claim 1, **characterized by** further including a step of keeping the operating state of each module of the phase, in which the modules, the states of which need to be switched into the hot standby state, are located unchanged in a case that the number of modules, the states of which need to be switched into the hot standby state is equal to zero, and keeping calculating the number of modules, the states of which need to be switched into the hot standby state, of the phase in real time.

9. The method according to claim 1, **characterized in that** the hot standby state is:
a state that the module, the state of which needs to be switched into the hot standby state, is deblocked to operate and has voltage output capability, but the output voltage of the module, the state of which needs to be switched into the hot standby state, is kept to be 0.

10. A coordinated control system for a distributed compensator, wherein the distributed compensator is composed of converters that are connected to three phases of alternating-current lines in series respectively, the converters of each phase are formed by multiple modules sequentially connected in series, and the coordinated control system is **characterized in that** it includes:
a module state monitoring component (10) configured to check (S220), in real time, an operating state of each module, in the converter of each phase of the distributed compensator;
an effective module number calculation component (20) configured to calculate, in real time, a first number of modules in each phase according to the operating state of each module, and calculate (S230), in real time, a second number of modules, which can effectively output voltages, of the distributed compensator, the first number of modules being the number of available modules, which have normal operation conditions and do not have faults, in the converter of each phase; and
a module hot standby state control component (30) configured to calculate, in real time, the number of modules, the states of which need to be converted into a hot standby state, in the converter of each phase, and switch the state of modules, which need to be switched into the hot standby state, in the converter of each phase into the hot standby state.

11. The coordinated control system according to claim 10, **characterized by** further comprising:
a multiple circuit line communication component (40) configured to take effect only in a case that the distributed compensator is in a multiple circuit line operating mode, and
determine the minimum value of the first number of modules in each parallel multiple alternating-current line.

12. The coordinated control system according to claim 10, **characterized in that** the module hot standby state control component is configured to calculate, in real time, the number of modules, the states of which need to be switched into the hot standby state, in the converter of each phase; and in a case that the number of modules, the states of which need to be switched into the hot standby state, in one phase of each phase is zero, no module in the one phase is switched into the hot standby state.

13. The coordinated control system according to claim 10, **characterized in that** the operating state includes module deblocked, module blocked and module fault.

14. A computer device, comprising a memory and a processor, the memory storing a computer program, **characterized in that** the processor executes the computer program to implement the steps of the method according to any one of claims 1 to 9.

15. A computer readable storage medium, storing a computer program, **characterized in that** the computer program is executed by the processor to implement the steps of the method according to any one of claims 1 to 9.

## Patentansprüche

1. Koordiniertes Steuerungssystem für einen verteilten Kompensator,
wobei der verteilte Kompensator aus Wandlern besteht, die mit drei Phasen von Wechselstromleitungen jeweils in Reihe verbunden sind, die Wandler, die zu jeder Phase verbunden sind, durch mehrere Module gebildet werden, die sequenziell in Reihe verbunden sind, und das Verfahren **gekennzeichnet ist durch**:
während des Prozesses von normalem Betrieb des verteilten Kompensators, Prüfen (S220) des Betriebszustandes jedes Moduls der mehreren Module in dem Wandler jeder Phase in Echtzeit, um die erste Anzahl von Modulen in jeder Phase zu ermitteln, wobei eine erste Anzahl von Modulen die Anzahl verfügbarer Module in dem Wandler jeder Phase ist, die normale Betriebsbedingungen aufweisen und keine Fehler aufweisen;
Berechnen (S230) einer zweiten Anzahl von Modulen des verteilten Kompensators, die effektiv Spannungen ausgeben können, in Echtzeit, wobei die zweite Anzahl von Modulen dem Minimalwert der ersten Anzahl von Modulen in jeder Phase gleich ist;
in einem Fall, in dem ein erstes Modul des Wandlers einer ersten Phase einen Fehler aufweist, Sperren und Umgehen (S240) des ersten Moduls und des Weiteren Subtrahieren von 1 von der ersten Anzahl von Modulen in der ersten Phase und unverändertes Beibehalten der ersten Anzahl von Modulen in einer fehlerfreien Phase; sowie
Vergleichen (S250) der ersten Anzahl von Modulen in jeder Phase mit der zweiten Anzahl von Modulen für jede der drei Phasen, und in einem Fall, in dem die erste Anzahl von Modulen größer ist als die zweite Anzahl von Modulen, Umschalten eines Zustandes eines Moduls, der in einen heißen Bereitschaftszustand umgewandelt werden muss, und das sich in einem Wandler einer Phase befindet, in der die erste Anzahl von Modulen größer ist als die zweite Anzahl von Modulen, in den heißen Bereitschaftszustand; wobei die Anzahl von Modulen, deren Zustand in den heißen Bereitschaftszustand umgeschaltet werden muss, der Differenz zwischen der ersten Anzahl von Modulen der Phase, in der sich die Module befinden, die in den heißen Bereitschaftszustand umgeschaltet werden müssen, und der zweiten Anzahl von Modulen gleich ist.

2. Verfahren nach Anspruch 1, **dadurch gekennzeichnet, dass** sich der verteilte Kompensator in einem Einfachleitungs-Betriebsmodus befindet und nur eine Einfach-Wechselstromleitung in Reihe mit dem verteilten Kompensator verbunden ist.

3. Verfahren nach Anspruch 2, **dadurch gekennzeichnet, dass** ein Schritt, in dem in Echtzeit die zweite Anzahl von Modulen des verteilten Kompensators berechnet wird, die effektiv Spannungen ausgeben können, einschließt:
Bestimmen des Minimalwertes der ersten Anzahl von Modulen jeder Phase in der Einfach-Wechselstromleitung als die zweite Anzahl von Modulen.

4. Verfahren nach Anspruch 1, **dadurch gekennzeichnet, dass** sich der verteilte Kompensator in einem Mehrfachleitungs-Betriebsmodus befindet und parallele Mehrfach-Wechselstromleitungen sämtlich in Reihe mit dem verteilten Kompensator verbunden sind.

5. Verfahren nach Anspruch 4, **dadurch gekennzeichnet, dass** ein Schritt, in dem in Echtzeit die zweite Anzahl von Modulen des verteilten Kompensators berechnet wird, die effektiv Spannungen ausgeben können, einschließt:
Empfangen des Minimalwertes der ersten Anzahl von Modulen jeder Phase in jeder parallelen Mehrfach-Wechselstromleitung und Bestimmen eines Minimalwertes von den empfangenen Minimalwerten als die zweite Anzahl von Modulen.

6. Verfahren nach Anspruch 1, **dadurch gekennzeichnet, dass** es des Weiteren einschließt:
sequentielles Feststellen, ob jedes Modul der Phase einen Fehler aufweist, in einem Fall, in dem die Anzahl von Modulen, deren Zustände in den heißen Bereitschaftszustand umgeschaltet werden müssen, 1 oder mehr beträgt; Umschalten des Zustandes eines aktuellen Moduls in den heißen Bereitschaftszustand in einem Fall, in dem das aktuelle Modul keinen Fehler aufweist; und Subtrahieren von 1 von der Anzahl von Modulen, deren Zustände in den heißen Bereitschaftszustand umgeschaltet werden müssen.

7. Verfahren nach Anspruch 6, **dadurch gekennzeichnet, dass** ein Schritt, in dem sequentiell festgestellt wird, ob jedes Modul der Phase einen Fehler aufweist, in einem Fall, in dem die Anzahl von Modulen, deren Zustände in den heißen Bereitschaftszustand umgeschaltet werden müssen, 1 oder mehr beträgt, einschließt:
Überspringen von Umschalten des Zustandes eines aktuellen Moduls in den heißen Bereitschaftszustand in einem Fall, in dem das aktuelle Modul einen Fehler aufweist, und unverändertes Beibehalten der Anzahl von Modulen, deren Zustand in den heißen Bereitschaftszustand umgeschaltet werden muss.

8. Verfahren nach Anspruch 1, **dadurch gekennzeichnet, dass** es des Weiteren einen Schritt einschließt, in dem:
der Betriebszustand jedes Moduls der Phase, in der sich die Module befinden, deren Zustände in den heißen Bereitschaftszustand umgeschaltet werden müssen, in einem Fall unverändert belassen wird, in dem die Anzahl von Modulen, deren Zustände in den heißen Bereitschaftszustand umgeschaltet werden müssen, 0 beträgt, und die Anzahl von Modulen der Phase, deren Zustände in den heißen Bereitschaftszustand umgeschaltet werden müssen, weiter in Echtzeit berechnet wird.

9. Verfahren nach Anspruch 1, **dadurch gekennzeichnet, dass** der heiße Bereitschaftszustand ist:
ein Zustand, in dem das Modul, dessen Zustand in den heißen Bereitschaftszustand umgeschaltet werden muss, zum Arbeiten entsperrt wird und Spannungsausgabe-Fähigkeit aufweist, jedoch die Ausgangsspannung des Moduls, dessen Zustand in den heißen Bereitschaftszustand umgeschaltet werden muss, auf 0 gehalten wird.

10. Koordiniertes Steuerungssystem für einen verteilten Kompensator, wobei der verteilte Kompensator aus Wandlern besteht, die jeweils mit drei Phasen von Wechselstromleitungen in Reihe verbunden sind, die Wandler jeder Phase durch mehrere Module gebildet werden, die sequentiell in Reihe verbunden sind, und das koordinierte Steuerungssystem **dadurch gekennzeichnet ist, dass** es einschließt:
eine Komponente (10) zum Überwachen eines Modul-Zustandes, die so ausgeführt ist, dass sie in Echtzeit einen Betriebszustand jedes Moduls in dem Wandler jeder Phase des verteilten Kompensators prüft (S220);
eine Komponente (20) für Berechnung einer Anzahl effektiver Module, die so ausgeführt ist, das sie in Echtzeit eine erste Anzahl von Modulen in jeder Phase entsprechend dem Betriebszustand jedes Moduls berechnet und in Echtzeit eine zweite Anzahl von Modulen des verteilten Kompensators berechnet (S230), die effektiv Spannungen ausgeben können, wobei die erste Anzahl von Modulen die Anzahl verfügbarer Module in dem Wandler jeder Phase ist, die normale Betriebsbedingungen aufweisen und keine Fehler aufweisen; sowie
eine Komponente (30) für Steuerung eines heißen Bereitschaftszustandes von Modulen, die so ausgeführt ist, das sie in Echtzeit die Anzahl von Modulen des Wandlers in jeder Phase berechnet, deren Zustände in einen heißen Bereitschaftszustand umgewandelt werden müssen, und den Zustand von Modulen in dem Wandler jeder Phase, die in den heißen Bereitschaftszustand umgeschaltet werden müssen, in den heißen Bereitschaftszustand umschaltet.

11. Koordiniertes Steuerungssystem nach Anspruch 10, **dadurch gekennzeichnet, dass** es des Weiteren umfasst:
eine Komponente (40) für Mehrfachleitungs-Kommunikation, die so ausgeführt ist, dass sie nur in einem Fall wirksam wird, in dem sich der verteilte Kompensator in einem Mehrfachleitungs-Betriebsmodus befindet, und sie den Minimalwert der ersten Anzahl von Modulen in jeder parallelen Mehrfach-Wechselstromleitung bestimmt.

12. Koordiniertes Steuerungssystem nach Anspruch 10, **dadurch gekennzeichnet, dass** die Komponente für Steuerung eines heißen Bereitschaftszustandes von Modulen so ausgeführt ist, dass sie in Echtzeit die Anzahl von Modulen in dem Wandler jeder Phase berechnet, deren Zustände in den heißen Bereitschaftszustand umgeschaltet werden müssen; und wobei in einem Fall, in dem die Anzahl von Modulen jeder Phase, deren Zustände in den heißen Bereitschaftszustand umgeschaltet werden müssen, in einer Phase 0 beträgt, kein Modul in der einen Phase in den heißen Bereitschaftszustand umgeschaltet wird.

13. Koordiniertes Steuerungssystem nach Anspruch 10, **dadurch gekennzeichnet, dass** der Betriebszustand Entsperrung des Moduls, Sperrung des Moduls und Fehler des Moduls einschließt

14. Computervorrichtung, die einen Speicher und einen Prozessor umfasst, wobei der Speicher ein Computerprogramm speichert, **dadurch gekennzeichnet, dass** der Prozessor das Computerprogramm ausführt, um die Schritte des Verfahrens nach einem der Ansprüche 1 bis 9 durchzuführen.

15. Computerlesbares Speichermedium, das ein Computerprogramm speichert, **dadurch gekennzeichnet, dass** das Computerprogramm von dem Prozessor ausgeführt wird, um die Schritte des Verfahrens nach einem der Ansprüche 1 bis 9 durchzuführen.

## Revendications

1. Procédé de commande coordonnée pour un compensateur distribué, dans lequel le compensateur distribué est composé de convertisseurs qui sont respectivement connectés en série à trois phases de lignes à courant alternatif, les convertisseurs qui sont connectés à chaque phase sont formés par de multiples modules séquentiellement connectés en série, et le procédé est **caractérisé par** les étapes consistant à :
pendant le processus de fonctionnement normal du compensateur distribué, vérifier (S220), en temps réel, l'état de fonctionnement de chaque module parmi les multiples modules du convertisseur de chaque phase, de manière à obtenir le premier nombre de modules de chaque phase, un premier nombre de modules étant le nombre de modules disponibles, qui ont des conditions normales de fonctionnement et ne présentent pas de défauts, dans le convertisseur de chaque phase ;
calculer (S230), en temps réel, un second nombre de modules, qui peuvent délivrer effectivement en sortie des tensions, du compensateur distribué, le second nombre de modules étant égal à la valeur minimale du premier nombre de modules dans chaque phase ;
dans le cas où un premier module du convertisseur d'une première phase présente un défaut, bloquer et contourner (S240) le premier module, et de plus, soustraire un du premier nombre de modules dans la première phase, et maintenir inchangé le premier nombre de modules dans une phase sans défaut ; et
pour chacune des trois phases, comparer (S250) le premier nombre de modules dans chaque phase au second nombre de modules, et dans un cas où le premier nombre de modules est supérieur au second nombre de modules, commuter un état d'un module, qui doit être converti en un état de secours automatique et qui se trouve dans un convertisseur d'une phase dans laquelle le premier nombre de modules est supérieur au second nombre de modules, en l'état de secours automatique ; le nombre de modules dont l'état doit être commuté en l'état de secours automatique est égal à la différence entre le premier nombre de modules de la phase où se trouvent les modules qui doivent être commutés en l'état de secours automatique et le second nombre de modules.

2. Procédé selon la revendication 1, **caractérisé en ce que** le compensateur distribué est dans un mode de fonctionnement à une ligne de circuit unique, et **en ce que** seule une ligne à courant alternatif de circuit unique est connectée en série au compensateur distribué.

3. Procédé selon la revendication 2, **caractérisé en ce qu'**une étape du calcul, en temps réel, du second nombre de modules, pouvant délivrer effectivement en sortie des tensions, du compensateur distribué comporte :
la détermination de la valeur minimale du premier nombre de modules de chaque phase dans la ligne à courant alternatif de circuit unique en tant que le second nombre de modules.

4. Procédé selon la revendication 1, **caractérisé en ce que** le compensateur distribué est dans un mode de fonctionnement à lignes de circuit multiples, et **en ce que** des lignes à courant alternatif de circuit multiples parallèles sont toutes connectées en série au compensateur distribué.

5. Procédé selon la revendication 4, **caractérisé en ce qu'**une étape du calcul, en temps réel, du second nombre de modules, pouvant délivrer effectivement en sortie des tensions, du compensateur distribué comporte :
la réception de la valeur minimale du premier nombre de modules de chaque phase dans chacune des lignes à courant alternatif de circuit multiples parallèles, et la détermination d'une valeur minimale d'après les valeurs minimales reçues en tant que le second nombre de modules.

6. Procédé selon la revendication 1, **caractérisé en ce qu'**il comporte en outre :
la détermination séquentielle si chaque module de la phase présente un défaut dans un cas où le nombre de modules, dont les états doivent être commutés en l'état de secours automatique, est supérieur ou égal à 1 ; la commutation de l'état d'un module courant en l'état de secours automatique dans un cas où le module courant ne présente pas de défaut ; et la soustraction par 1 du nombre de modules, dont les états doivent être commutés en l'état de secours automatique.

7. Procédé selon la revendication 6, **caractérisé en ce qu'**une étape de la détermination séquentielle si chaque module de la phase présente un défaut dans un cas où le nombre de modules, dont les états doivent être commutés en l'état de secours automatique, est supérieur ou égal à 1 comporte :
l'omission de la commutation de l'état du module courant en l'état de secours automatique dans un cas où le module courant présente un défaut, et le maintien du nombre de modules inchangé, dont l'état doit être commuté en l'état de secours automatique.

8. Procédé selon la revendication 1, **caractérisé en ce qu'**il comporte en outre une étape consistant à maintenir inchangé l'état de fonctionnement de chaque module de la phase, dans laquelle sont situés les modules, dont les états doivent être commutés en l'état de secours automatique, dans un cas où le nombre de modules, dont les états doivent être commutés en l'état de secours automatique, est égal à zéro, et la poursuite du calcul en temps réel du nombre de modules, dont les états doivent être commutés en l'état de secours automatique, de la phase.

9. Procédé selon la revendication 1, **caractérisé en ce que** l'état de secours automatique est :
un état tel que le module, dont l'état doit être commuté en l'état de secours automatique, est débloqué pour fonctionner et présente une capacité de sortie de tension, mais tel que la tension de sortie du module, dont l'état doit être commuté en l'état de secours automatique, est maintenue pour être égale à 0.

10. Système de commande coordonnée pour un compensateur distribué, dans lequel le compensateur distribué est composé de convertisseurs qui sont respectivement connectés en série à trois phases de lignes à courant alternatif, les convertisseurs de chaque phase sont formés de multiples modules séquentiellement connectés en série, et le système de commande coordonnée est **caractérisé en ce qu'**il comporte :
un composant de surveillance d'état de module (10) configuré pour vérifier (S220), en temps réel, un état de fonctionnement de chaque module, dans le convertisseur de chaque phase du compensateur distribué ;
un composant de calcul de nombre de modules effectifs (20) configuré pour calculer, en temps réel, un premier nombre de modules dans chaque phase en fonction de l'état de fonctionnement de chaque module, et calculer (S230), en temps réel, un second nombre de modules, qui peuvent délivrer effectivement en sortie des tensions, du compensateur distribué, le premier nombre de modules étant le nombre de modules disponibles, qui ont des conditions de fonctionnement normales et ne présentent pas de défauts, dans le convertisseur de chaque phase ; et
un composant de commande d'état de secours automatique de modules (30) configuré pour calculer, en temps réel, le nombre de modules, dont les états doivent être convertis en un état de secours automatique, dans le convertisseur de chaque phase, et commuter l'état de modules, qui doivent être commutés en l'état de secours automatique, dans le convertisseur de chaque phase en l'état de secours automatique.

11. Système de commande coordonnée selon la revendication 10, **caractérisé en ce qu'**il comprend en outre :
un composant de communication à lignes de circuit multiples (40) configuré pour ne prendre effet que dans un cas où le compensateur distribué est dans un mode de fonctionnement à lignes de circuit multiples, et déterminer la valeur minimale du premier nombre de modules dans chacune des lignes à courant alternatif multiples parallèles.

12. Système de commande coordonnée selon la revendication 10, **caractérisé en ce que** le composant de commande d'état de secours automatique de modules est configuré pour calculer, en temps réel, le nombre de modules, dont les états doivent être commutés en l'état de secours automatique, dans le convertisseur de chaque phase ; et dans un cas où le nombre de modules, dont les états doivent être commutés en l'état de secours automatique, dans une phase de chaque phase est égal à zéro, aucun module dans ladite une phase n'est commuté en l'état de secours automatique.

13. Système de commande coordonnée selon la revendication 10, **caractérisé en ce que** l'état de fonctionnement comporte un module débloqué, un module bloqué et un défaut de module.

14. Dispositif informatique, comprenant une mémoire et un processeur, la mémoire stockant un programme informatique, **caractérisé en ce que** le processeur exécute le programme informatique pour mettre en œuvre les étapes du procédé selon l'une quelconque des revendications 1 à 9.

15. Support de stockage lisible par ordinateur, stockant un programme informatique, **caractérisé en ce que** le programme informatique est exécuté par le processeur pour mettre en œuvre les étapes du procédé selon l'une quelconque des revendications 1 à 9.
